# EUROPEAN PATENT APPLICATION

(11) **EP 4 528 872 A1**
(43) Date of publication of application: **26.03.2025**
(21) Application number: 22942556.6
(22) Date of filing: 19.05.2022
(51) Int. Cl.: H01M 10/0562, H01M 4/134, H01M 4/38, H01M 4/66, H01M 10/052

(54) **LITHIUM SECONDARY BATTERY**

(71) Applicant: NISSAN MOTOR CO., LTD., Kanagawa 221-0023 (JP); RENAULT S.A.S., 92100 Boulogne-Billancourt (FR)
(72) Inventor: TAKADA, Harumi, Atsugi-shi, Kanagawa 243-0123 (JP); UEDA, Naoki, Atsugi-shi, Kanagawa 243-0123 (JP)
(74) Representative: Grünecker Patent- und Rechtsanwälte PartG mbB
(86) International application number: PCT/IB2022/000288
(87) International publication number: WO 2023/223067

(57) **Abstract**

The object of the present invention is to provide a means capable of developing a rate characteristic which can respond to fast charge. One aspect of the present invention is related to a lithium secondary battery including a power generating element which includes: a positive electrode including a positive electrode current collector and a positive electrode active material layer containing a positive electrode active material capable of occluding and releasing lithium ions and disposed on a surface of the positive electrode current collector; a negative electrode including a negative electrode current collector, in which lithium metal is deposited on the negative electrode current collector when charging; and a solid electrolyte layer containing a solid electrolyte and intervening between the positive electrode and the negative electrode. Further, the lithium secondary battery is characterized that a carbon particle layer containing carbon particles having a intensity ratio R (I_{G}/I_{D}) of G-band peak intensity (I_{G}) and D-band peak intensity (I_{D}) measured by raman scattering spectroscopy of 7 or greater, is arranged on at least a part of a region, where the positive electrode active material layer faces the negative electrode current collector, of a main surface of the negative electrode current collector facing the solid electrolyte layer.

## Description

### TECHNICAL FIELD

The present invention relates to a lithium secondary battery.

### BACKGROUND ART

In recent years, in order to cope with global warming, a reduction of carbon dioxide emission is strongly desired. The automotive industry has a growing expectation on the introduction of electric vehicles (EV) and hybrid electric vehicles (HEV) for a reduction of carbon dioxide emission and has been intensively working on the development of nonaqueous electrolyte secondary batteries such as motor-driving secondary batteries, which become key to the practical application of these electric vehicles.

The motor-driving secondary batteries are required to have very high output characteristics and high energy as compared to consumer lithium-ion secondary batteries for mobile phones, notebook computers, and the like. Therefore, attention is being given to lithium ion secondary batteries having the highest theoretical energy among all practical batteries, and the development of such lithium ion secondary batteries has been pursued rapidly at present.

Here, lithium-ion secondary batteries that are currently widespread use a combustible organic electrolyte solution as an electrolyte. In such a liquid-type lithium-ion secondary battery, safety measures against liquid leakage, short circuit, overcharge, and the like are more strictly required than other batteries.

Therefore, in recent years, research and development on an all-solid-state lithium secondary battery using an oxide-based or sulfide-based solid electrolyte as an electrolyte have been actively conducted. The solid electrolyte is a material mainly made of an ion conductor that enables ion conduction in a solid. Therefore, in an all-solid-state lithium secondary battery, in principle, various problems caused by a combustible organic electrolyte solution do not occur unlike the conventional liquid-type lithium-ion secondary battery. In general, use of a high-potential and large-capacity positive electrode material and a large-capacity negative electrode material can achieve significant improvement in output density and energy density of a battery.

Conventionally, as one type of all-solid-state lithium secondary batteries, a so-called lithium-deposition-type in which lithium metal is deposited on a negative electrode current collector in a charging process is known. In the charging process of such a lithium-deposition-type all-solid-state lithium secondary battery, lithium metal is deposited between the solid electrolyte layer and the negative electrode current collector.

Conventionally, as a technique for improving charge-discharge characteristics such as discharge capacity density and cycle characteristics of an all-solid-state lithium secondary battery, JP 2014-93156 A discloses a sheet-shaped electrode in which an electrode active material layer containing a particulate electrode active material, a conductive resin layer, and a current collector layer are laminated, and in Examples of the same literature, the sheet-shaped electrode is used for a positive electrode of a lithium deposition type all-solid-state lithium secondary battery.

### SUMMARY OF INVENTION

### Technical Problem

The present inventors have also studied the technique described in the above literature while developing a technique for improving the fast charge characteristics of a lithium secondary battery. However, according to the study of the present inventors, it has been found that there is a case where sufficient fast charge characteristics cannot be achieved even if the technique described in the above literature is used.

Therefore, an object of the present invention is to provide a means capable of developing a rate characteristic which can respond to fast charge in a lithium-deposition-type lithium secondary battery.

### Solution to Problem

The present inventors have conducted intensive studies to solve the above problems. As a result, the present inventors have found that in a lithium-deposition-type lithium secondary battery, not only a conductive layer is disposed on a main surface of a negative electrode current collector facing a solid electrolyte layer, but also carbon particles having an intensity ratio R (I_{G}/I_{D}) of G-band peak intensity (I_{G}) and D-band peak intensity (I_{D}) measured by Raman scattering spectroscopy of a predetermined value or more are contained in the conductive layer, whereby the above problems can be solved, and have completed the present invention.

That is, one aspect of the present invention relates to a lithium secondary battery including a power generating element, the power generating element including: a positive electrode in which a positive electrode active material layer containing a positive electrode active material capable of occluding and releasing lithium ions is disposed on a surface of a positive electrode current collector; a negative electrode which includes a negative electrode current collector in which lithium metal is deposited on the negative electrode current collector during charging; and a solid electrolyte layer intervening between the positive electrode and the negative electrode and containing a solid electrolyte. The lithium secondary battery is characterized in that a carbon particle layer containing carbon particles having an intensity ratio R (I_{G}/I_{D}) of G-band peak intensity (I_{G}) and D-band peak intensity (I_{D}) measured by Raman scattering spectroscopy of 7 or more, is disposed on at least a part of a region, where the positive electrode active material layer faces the negative electrode current collector, of a main surface of the negative electrode current collector facing the solid electrolyte layer.

### BRIEF DESCRIPTION OF DRAWINGS

Fig. 1 is a perspective view illustrating an appearance of a flat laminate type all-solid-state lithium secondary battery as one embodiment of the present invention.
Fig. 2 is a cross-sectional view taken along line 2-2 illustrated in Fig. 1. Fig. 2 shows a cross-sectional view of a laminate type secondary battery during charging.
Fig. 3 is an enlarged cross-sectional view of a single battery layer of a laminate type secondary battery according to one embodiment of the present invention.

### DESCRIPTION OF EMBODIMENTS

One aspect of the present invention is a lithium secondary battery including a power generating element, the power generating element including: a positive electrode in which a positive electrode active material layer containing a positive electrode active material capable of occluding and releasing lithium ions is disposed on a surface of a positive electrode current collector; a negative electrode which includes a negative electrode current collector in which lithium metal is deposited on the negative electrode current collector during charging; and a solid electrolyte layer intervening between the positive electrode and the negative electrode and containing a solid electrolyte, in which a carbon particle layer containing carbon particles having an intensity ratio R (I_{G}/I_{D}) of G-band peak intensity (I_{G}) and D-band peak intensity (I_{D}) measured by Raman scattering spectroscopy of 7 or more, is disposed on at least a part of a region, where the positive electrode active material layer faces the negative electrode current collector, of a main surface of the negative electrode current collector facing the solid electrolyte layer. According to the present invention, a rate characteristic which can respond to fast charge can be developed in a lithium-deposition-type lithium secondary battery.

Hereinafter, the present aspects will be described with reference to the drawings, but the technical scope of the present invention should be determined based on the description of the claims and is not limited to the following aspects. Dimensional ratios in the drawings are exaggerated for convenience of description and may be different from actual ratios.

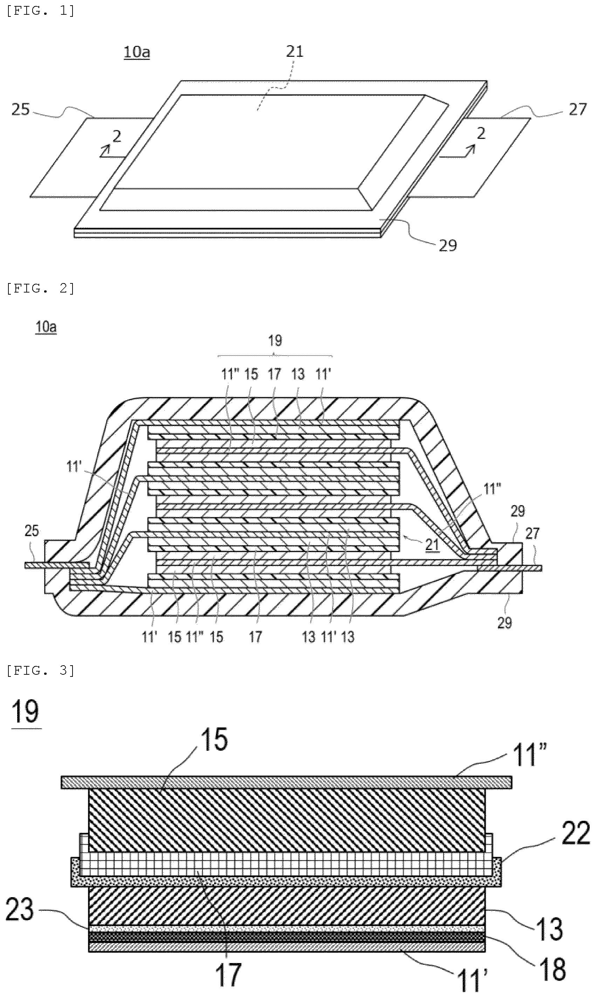

Fig. 1 is a perspective view illustrating an appearance of a flat laminate type all-solid-state lithium secondary battery (hereinafter, also simply referred to as "laminate type secondary battery") as one embodiment of the present invention. Fig. 2 is a cross-sectional view taken along line 2-2 illustrated in Fig. 1. Fig. 2 shows a cross-sectional view of a laminate type secondary battery during charging.

As illustrated in Fig. 1, a laminate type secondary battery 10a has a flat rectangular shape, and a negative electrode current collecting plate 25 and a positive electrode current collecting plate 27 for extracting electric power are extended from both sides of the battery. A power generating element 21 is wrapped in a battery outer casing material (laminate film 29) of the laminate type secondary battery 10a, the periphery of the battery outer casing material is heat-sealed, and the power generating element 21 is hermetically sealed in a state where the negative electrode current collecting plate 25 and the positive electrode current collecting plate 27 are extended to the outside. In the current collecting plates (25 and 27) illustrated in Fig. 1, the negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side.

As illustrated in Fig. 2, the power generating element 21 of the laminate type secondary battery 10a of the present aspect has a configuration in which a negative electrode where a negative electrode active material layer 13 containing lithium metal is disposed on both surfaces of a negative electrode current collector 11', a solid electrolyte layer 17, and a positive electrode where a positive electrode active material layer 15 containing a lithium transition metal composite oxide is disposed on both surfaces of a positive electrode current collector 11" are laminated, at the time of charging. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thereby, the negative electrode, the solid electrolyte layer, and the positive electrode that are adjacent constitute one single battery layer 19. Therefore, it can be said that the laminate type secondary battery 10a illustrated in Fig. 2 has a configuration in which a plurality of single battery layers 19 are laminated to be electrically connected in parallel.

The negative electrode current collector 11' and the positive electrode current collector 11" have a structure in which the negative electrode current collecting plate 25 and the positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between end parts of the laminate film 29. The negative electrode current collecting plate 25 and the positive electrode current collecting plate 27 may be attached to the negative electrode current collector 11' and the positive electrode current collector 11" of the respective electrodes with a positive electrode terminal lead and a negative electrode terminal lead (not illustrated) interposed therebetween, respectively by ultrasonic welding, resistance welding, or the like as necessary.

Fig. 3 is an enlarged cross-sectional view of the single battery layer 19 of a laminate type secondary battery according to one embodiment of the present invention. As illustrated in Fig. 3, the single battery layer 19 constituting the laminate type secondary battery 10a according to the present aspect has a positive electrode including the positive electrode current collector 11" and the positive electrode active material layer 15 disposed on the surface of the positive electrode current collector 11". The solid electrolyte layer 17 containing a solid electrolyte is disposed on the surface of the positive electrode active material layer 15 on a side opposite to the positive electrode current collector 11". Here, in the embodiment illustrated in Fig. 3, an outer peripheral edge portion of the solid electrolyte layer 17 extends to the side surface of the positive electrode active material layer 15 over the entire periphery thereof. Thereby, as a result, the positive electrode active material layer 15 is configured to be slightly smaller than the solid electrolyte layer 17. That is, when the power generating element 21 is viewed in plan view, the entire periphery of an outer peripheral end of the positive electrode active material layer 15 is located inside an outer peripheral end of the solid electrolyte layer 17. With such a configuration, even when lithium metal constituting the negative electrode active material layer 13 is pushed out from the outer peripheral end of the solid electrolyte layer 17 toward the positive electrode active material layer 15 due to confining pressure from a pressurizing member, the lithium metal is less likely to come into contact with the side surface of the positive electrode active material layer 15. As a result, the effect of preventing a short circuit is further enhanced. The "side surface of the positive electrode active material layer" means a surface not facing the negative electrode current collector, among surfaces of the positive electrode active material layer which are not in contact with the positive electrode current collector.

In the embodiment illustrated in Fig. 3, a graphene layer 18 (carbon particle layer) containing graphene particles having a relatively large intensity ratio R (I_{G}/I_{D}) is provided on the entire surface of a region, where the positive electrode active material layer 15 faces the negative electrode current collector 11', of a main surface of the negative electrode current collector 11' facing the solid electrolyte layer 17 (the details of the intensity ratio R will be described later). When this graphene layer 18 (carbon particle layer) is present on the surface of the negative electrode current collector 11', the contact property between lithium metal as the negative electrode active material layer 13 and the negative electrode current collector 11' and the diffusibility of lithium ions in the plane direction are improved. As a result, even in a charging process at a high rate such as fast charge, uniform deposition of lithium metal as the negative electrode active material layer 13 becomes possible, and sufficient battery performance can be maintained. Therefore, it can be said that the graphene layer 18 (carbon particle layer) functions as a lithium diffusion layer.

A carbon black layer 22 containing carbon black nanoparticles is provided on the entire surface of a main surface of the solid electrolyte layer 17 facing the negative electrode current collector 11' and the entire surface of a side surface of the solid electrolyte layer 17. Carbon black constituting this carbon black layer 22 has lithium-ion conductivity, so that the carbon black layer 22 can conduct lithium ions. Therefore, the progression of the battery reaction is not hindered by disposing the carbon black layer 22. This carbon black layer 22 also has a function of suppressing a reaction between lithium metal (negative electrode active material layer 13) deposited on the negative electrode current collector 11' during charging and the solid electrolyte contained in the solid electrolyte layer 17. Therefore, it can be said that the carbon black layer 22 functions as an ion-conductive reaction suppression layer. The "side surface of the solid electrolyte layer" means a surface on which the solid electrolyte layer does not face any of the positive electrode active material layer and the negative electrode current collector during discharging in which the negative electrode active material layer 13 made of lithium metal does not exist. Such a carbon black layer 22 is also disposed on the side surface of the solid electrolyte layer 17, so that even when lithium metal deposited on the surface of the negative electrode current collector 11' during charging is pushed out from the outer peripheral end of the solid electrolyte layer 17 by the confining pressure of the pressurizing member, contact between the solid electrolyte layer 17 and the negative electrode active material layer 13 is prevented. Since an effective area of lithium metal facing the positive electrode active material layer 15 with the carbon black layer 22 and the solid electrolyte layer 17 interposed therebetween is further increased, there is an advantage that charge-discharge efficiency can be further improved.

In the embodiment illustrated in Fig. 3, a magnesium layer 23 containing a magnesium salt is provided on the entire main surface of the carbon black layer 22 facing the negative electrode current collector 11'. When this magnesium layer 23 is present, there is an advantage that high-rate characteristics (resistance to fast charge) are further improved. This is considered to be because the magnesium layer 23 intervenes between the carbon black layer 22 and the negative electrode current collector 11', so that energy when lithium ions are deposited as lithium metal in the charging process is reduced, and as a result, charge and discharge at a higher current density becomes possible. Therefore, it can be said that the magnesium layer 23 functions as a lithium deposition energy reducing layer.

In the laminate type secondary battery 10a according to the present aspect, it is preferable that the power generating element 21 sealed in the laminate film 29 and the power generating element 21 sealed in the laminate film 29 illustrated in Fig. 1 are sandwiched between two plate-shaped members and further fastened using a fastening member. Thereby, the plate-shaped member and the fastening member function as a pressurizing member that pressurizes (confines) the power generating element 21 in the lamination direction thereof. Examples of the plate-shaped member include a metal plate, a resin plate, and the like. Examples of the fastening member include a bolt, a nut, and the like. However, the pressurizing member is not particularly limited as long as it is a member that can pressurize the power generating element 21 in the lamination direction. Typically, a combination of a plate formed of a material having rigidity such as a plate-shaped member and the above-described fastening member is used as the pressurizing member. As the fastening member, not only the bolt and the nut but also a tension plate or the like that fixes the end part of the plate-shaped member so as to confine the power generating element 21 in the lamination direction may be used. The lower limit of the load applied to the power generating element 21 (confining pressure in the lamination direction of the power generating element) is, for example, 0.1 MPa or more, preferably 1 MPa or more, more preferably 3 MPa or more, and further preferably 5 MPa or more. The upper limit of the confining pressure in the lamination direction of the power generating element is, for example, 100 MPa or less, preferably 70 MPa or less, more preferably 40 MPa or less, and further preferably 10 MPa or less.

Hereinafter, main components of the laminate type secondary battery 10a described above will be described.

### [Positive electrode current collector]

The positive electrode current collector is a conductive member that functions as a flow path for electrons emitted from a positive electrode toward an external load or flowing from a power source toward the positive electrode along with the progression of the battery reaction (charge and discharge reaction). A material constituting the positive electrode current collector is not particularly limited. As a constituent material of the positive electrode current collector, for example, a metal or a resin having conductivity can be adopted. The thickness of the positive electrode current collector is not particularly limited, but is, for example, 10 to 100 µm.

### [Positive electrode active material layer]

A positive electrode constituting the lithium secondary battery according to the present aspect has a positive electrode active material layer containing a positive electrode active material capable of occluding and releasing lithium ions.

The positive electrode active material is not particularly limited as long as it is a material that can release lithium ions in the charging process of the secondary battery and can occlude lithium ions in the discharging process. The type of the positive electrode active material is not particularly limited, but examples thereof include layered rock salt-type active materials such as LiCoO₂, LiMnO₂, LiNiO₂, LiVO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, Si-containing active materials such as Li₂FeSiO₄ and Li₂MnSiO₄, and the like. Examples of the oxide active material other than those described above include Li₄Ti₅O₁₂. Among them, a composite oxide containing lithium and nickel is preferably used, and Li(Ni-Mn-Co)O₂ and a composite oxide in which a part of these transition metals is replaced with another element (hereinafter, also simply referred to as "NMC composite oxide") are further preferably used. The NMC composite oxide has a layered crystal structure in which a lithium atom layer and a transition metal (Mn, Ni, and Co are arranged with regularity) atom layer are alternately stacked via an oxygen atom layer, one Li atom is included per atom of transition metal M, and the extractable Li amount is twice the amount of spinel type lithium manganese oxide, that is, the supply ability is two times higher, and thus it can have high capacity.

As described above, the NMC composite oxide also includes a composite oxide in which a part of transition metal element is replaced with another metal element. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like, Ti, Zr, Nb, W, P, Al, Mg, V, Ca, Sr, and Cr are preferable, Ti, Zr, P, Al, Mg, and Cr are more preferable, and from the viewpoint of improving cycle characteristics, Ti, Zr, Al, Mg, and Cr are further preferable.

It is also one of preferred embodiments that a sulfur-based positive electrode active material is used. Examples of the sulfur-based positive electrode active material include particles or a thin film of an organic sulfur compound or an inorganic sulfur compound, and any material may be used as long as the material can release lithium ions during charging and occlude lithium ions during discharging by utilizing an oxidation-reduction reaction of sulfur.

In some cases, two or more kinds of positive electrode active materials may be used in combination. Needless to say, a positive electrode active material other than the above-described positive electrode active materials may be used.

Examples of the shape of the positive electrode active material include a particulate shape (spherical and fibrous shapes), a thin film shape, and the like. When the positive electrode active material is in a particulate shape, the average particle size (D50) thereof is, for example, preferably within a range of 1 nm to 100 µm, more preferably within a range of 10 nm to 50 µm, further preferably within a range of 100 nm to 20 µm, and particularly preferably within a range of 1 to 20 µm. In the present specification, the value of the average particle size (D50) can be measured by a laser diffraction scattering method.

The content of the positive electrode active material in the positive electrode active material layer is not particularly limited, but for example, is preferably within a range of 30 to 99 mass%, more preferably within a range of 40 to 90 mass%, further preferably within a range of 45 to 80 mass.

In the lithium secondary battery according to the present aspect, the positive electrode active material layer 15 preferably further contains a solid electrolyte. Examples of the solid electrolyte include a sulfide solid electrolyte, a resin solid electrolyte, and an oxide solid electrolyte. In the present specification, the solid electrolyte refers to a material mainly made of an ion conductor that enables ion conduction in a solid, and particularly refers to a material having a degree of lithium-ion conductivity at a normal temperature (25°C) of 1×10⁻⁵ S/cm or more, and the degree of lithium-ion conductivity thereof is 1×10⁻⁴ S/cm or more. Here, a value of the degree of ionic conductivity can be measured by an AC impedance method.

In another preferred embodiment of the secondary battery according to the present aspect, the solid electrolyte is preferably a sulfide solid electrolyte containing an S element, more preferably a sulfide solid electrolyte containing a Li element, an M element, and an S element, where the M element includes at least one element selected from the group consisting of P, Si, Ge, Sn, Ti, Zr, Nb, Al, Sb, Br, Cl, and I, and further preferably a sulfide solid electrolyte containing an S element, a Li element, and a P element, from the viewpoint of exhibiting excellent lithium-ion conductivity and being capable of further following the volume change of the electrode active material associated with charging and discharging.

The sulfide solid electrolyte may have a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS. As the sulfide solid electrolyte, for example, LGPS represented by Li₍₄₋ₓ₎Ge₍₁₋ₓ₎PₓS₄ (x satisfies 0 < x < 1) or the like may be used. More specifically, examples of the sulfide solid electrolyte include LPS (Li₂S-P₂S₅), Li₇P₃S₁₁, Li_{3.2}P_{0.96}S, Li_{3.25}Ge_{0.25}P_{0.75}S₄, Li₁₀GeP₂S₁₂, Li₆PS₅X (where X is Cl, Br, or I), and the like. The description of "Li₂S-P₂S₅" means a sulfide solid electrolyte obtained by using a raw material composition containing Li₂S and P₂S₅, and the same applies to other descriptions. Above all, the sulfide solid electrolyte has high ion conductivity and low volume modulus, and thus is preferably selected from the group consisting of LPS (Li₂S-P₂S₅), Li₆PS₅X (where X is Cl, Br, or I), Li₇P₃S₁₁, Li_{3.2}P_{0.96}S, and Li₃PS₄, from the viewpoint of capable of further following the volume change of the electrode active material associated with charging and discharging.

The content of the solid electrolyte in the positive electrode active material layer is not particularly limited, but for example, is preferably within a range of 1 to 70 mass%, more preferably within a range of 10 to 60 mass%, further preferably within a range of 20 to 55 mass%.

The positive electrode active material layer may further contain at least one of a conductive aid and a binder in addition to the positive electrode active material and the solid electrolyte. The thickness of the positive electrode active material layer varies depending on the configuration of the intended lithium secondary battery, but is, for example, preferably within a range of 0.1 to 1000 µm, and more preferably 40 to 100 µm.

### [Solid electrolyte layer]

The solid electrolyte layer is a layer intervening between the positive electrode active material layer and the negative electrode current collector and contains a solid electrolyte (usually as a main component). Since the specific form of the solid electrolyte contained in the solid electrolyte layer is the same as that described above, the detailed description thereof is omitted here.

The content of the solid electrolyte in the solid electrolyte layer is, for example, preferably within a range of 10 to 100 mass%, more preferably within a range of 50 to 100 mass%, further preferably within a range of 90 to 100 mass%, with respect to the total mass of the solid electrolyte layer.

The solid electrolyte layer may further contain a binder in addition to the solid electrolyte described above.

The thickness of the solid electrolyte layer varies depending on the configuration of the intended lithium secondary battery, but is, for example, preferably within a range of 0.1 to 1000 µm, and more preferably 10 to 40 µm.

### [Negative electrode current collector]

The negative electrode current collector is a conductive member that functions as a flow path for electrons emitted from a negative electrode toward a power source or flowing from an external load toward the negative electrode along with the progression of the battery reaction (charge and discharge reaction). A material constituting the negative electrode current collector is not particularly limited. As a constituent material of the negative electrode current collector, for example, a metal or a resin having conductivity can be adopted. The thickness of the negative electrode current collector is not particularly limited, but is, for example, 10 to 100 µm.

### [Negative electrode active material layer]

The lithium secondary battery according to the present aspect is a so-called lithium-deposition-type lithium secondary battery in which lithium metal is deposited on the negative electrode current collector in the charging process. A layer made of lithium metal deposited on the negative electrode current collector in this charging process is the negative electrode active material layer of the lithium secondary battery according to the present aspect. Therefore, the thickness of the negative electrode active material layer increases with the progression of the charging process, and the thickness of the negative electrode active material layer decreases with the progression of the discharging process. The negative electrode active material layer may not be present when the battery has been completely discharged, but in some cases, a negative electrode active material layer made of a certain amount of lithium metal may be disposed when the battery has been completely discharged. The thickness of the negative electrode active material layer (lithium metal layer) when the battery has been completely discharged is not particularly limited, but is usually 0.1 to 1000 µm.

### [Carbon particle layer]

In the lithium secondary battery according to the present aspect, a carbon particle layer containing carbon particles is disposed on at least a part of a region, where the positive electrode active material layer faces the negative electrode current collector, of a main surface of the negative electrode current collector facing the solid electrolyte layer. Here, the carbon particle layer contains carbon particles having an intensity ratio R (I_{G}/I_{D}) of G-band peak intensity (I_{G}) and D-band peak intensity (I_{D}) measured by Raman scattering spectroscopy of 7 or more.

In general, when a carbon material is analyzed by Raman spectroscopy, peaks usually occur near 1350 cm⁻¹ and near 1582 cm⁻¹. Carbon materials such as graphene and graphite having crystallinity have a strong peak near 1582 cm⁻¹, and this peak is usually referred to as a "G band". On the other hand, as the crystallinity decreases (crystal structure defects increase), a peak near 1350 cm⁻¹ appears. This peak is usually referred to as a "D band" (note that the peak of diamond is strictly 1333 cm⁻¹ and is distinguished from the D band). The intensity ratio R (I_{G}/I_{D}) of G-band peak intensity (I_{G}) and D-band peak intensity (I_{D}) is used as an index of the level of crystallinity of the carbon material. In the present aspect, the intensity ratio R (I_{G}/I_{D}) is calculated by measuring a Raman spectrum of carbon particles contained in the carbon particle layer using a microscopic Raman spectrometer. When the carbon particle layer contains carbon particles having different intensity ratios R, it can be calculated as a weighted average value of the intensity ratios R weighted by the mass of each type of carbon particles.

As described above, in the present aspect, it is essential that the intensity ratio R of the carbon particles contained in the carbon particle layer is 7 or more. In a preferred embodiment, the intensity ratio R of the carbon particles contained in the carbon particle layer is 25 or more, more preferably 50 or more, further preferably 500 or more, still more preferably 2000 or more, particularly preferably 5000 or more, and most preferably 8000 or more. The upper limit value of the intensity ratio R is not particularly limited but is usually 100000 or less.

The carbon material constituting the carbon particles contained in the carbon particle layer can be used without particular limitation as long as it shows the intensity ratio R as described above. In particular, examples of the carbon material showing a particularly high intensity ratio R include a carbon material formed of a graphene layer. The number of laminated graphene layers constituting these carbon materials is not particularly limited, but in the present specification, a flaky carbon material having up to ten laminated graphene layers is referred to as "graphene". Among the graphene, graphene having the number of laminated graphene layers of 1 is referred to as "single-layer graphene", and graphene having the number of laminated graphene layers of 2 to 10 is referred to as "multilayer graphene". A flaky carbon material having the number of laminated graphene layers of 11 or more is referred to as "graphite". Here, for example, the number of laminated graphene layers constituting the carbon material is preferably 1 to 100, more preferably 2 to 50, further preferably 3 to 20, and particularly preferably 4 to 10. Therefore, the carbon particles contained in the carbon particle layer according to the present aspect preferably include graphene or graphite, and more preferably include graphene. Graphene or graphite (particularly graphene) is a carbon material having high crystallinity as indicated by a high intensity ratio R. Therefore, it is possible to effectively contribute to the improvement of the contact property between lithium metal as the negative electrode active material layer and the negative electrode current collector and the diffusibility of lithium ions in the plane direction. The carbon particles contained in the carbon particle layer may be used singly or in combination of two or more kinds thereof. Examples of the carbon material other than those described above include carbon black, diamond (for example, one doped with boron), fullerene, carbon nanotube, carbon nanofiber (vapor-grown carbon fiber (VGCF or the like)), carbon nanohorn, carbon microcoil, carbon nanocoil, and the like. As the carbon particles, a commercially available product or a processed product obtained by processing a commercially available product may be used, or a material prepared by itself may be used. Since methods for producing the multilayer graphene and the graphite described above are widely known, detailed description thereof is omitted here. However, for example, the intensity ratio R can be controlled by changing the firing temperature of graphite, which is a precursor when carbon particles are prepared.

The content of the carbon particles in the carbon particle layer is not particularly limited, but is preferably 50 to 100 mass%, more preferably 80 to 99 mass%, and further preferably 90 to 98 mass%, with respect to the total amount of 100 mass% of the constituent components of the carbon particle layer.

The carbon particle layer according to the present aspect may contain a binder in addition to the carbon particles. Examples of the binder include thermoplastic polymers such as polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, styrene-butadiene-styrene block copolymer and a hydrogenated product thereof, and a styrene-isoprene-styrene block copolymer and a hydrogenated product thereof, fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethylvinylether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber), epoxy resins, and the like. Among them, polyvinylidene fluoride (PVDF) (including a compound in which a hydrogen atom is substituted with another halogen element), polyimide, styrene-butadiene rubber, carboxymethyl cellulose, polypropylene, polytetrafluoroethylene, polyacrylonitrile, and polyamide are preferably used.

The content of the binder in the carbon particle layer is not particularly limited, but is preferably 50 mass% or less, more preferably 1 to 20 mass%, and further preferably 2 to 10 mass%, with respect to the total amount of 100 mass% of the constituent components of the carbon particle layer.

The average thickness of the carbon particle layer is not particularly limited, and the carbon particle layer may be disposed at such a thickness that the above-described function can be exhibited. For example, the average thickness of the carbon particle layer is preferably 10 nm to 10 µm, more preferably 50 nm to 6 µm, and further preferably 1 to 4 µm. The "average thickness" of the carbon particle layer means a value calculated as an arithmetic average value of thicknesses measured at several to several tens of different points in the carbon particle layer.

Among the carbon particles contained in the carbon particle layer, the proportion of particles whose major axes are oriented in the plane direction of the carbon particle layer is preferably 80% or more, more preferably 85% or more, particularly preferably 90% or more, and most preferably 95% or more (the upper limit is 100%). Since the carbon particles are oriented in the plane direction as described above, the diffusibility of lithium ions in the plane direction can be further improved. The proportion is calculated by a method described in the section of Examples described later (observation of a cross-sectional image using a scanning electron microscope (SEM)).

The surface roughness of the main surface of the carbon particle layer on the solid electrolyte layer side (maximum height defined in JIS B 0601-2001; Rz) is preferably 15 µm or less, more preferably 12 µm or less, particularly preferably 10 µm or less, and most preferably 8 µm or less. When the maximum height (Rz) of the surface of the carbon particle layer is in such a range, local current concentration is less likely to occur during charging and discharging. As a result, the contact property between lithium metal as the negative electrode active material layer and the negative electrode current collector can be further improved.

The peel strength of the carbon particle layer from the negative electrode current collector is preferably 5 N/m or more, more preferably 10 N/m or more, and further preferably 15 N/m or more. When the peel strength between the carbon particle layer and the negative electrode current collector is in such a range, lithium metal is less likely to be deposited on the interface between the carbon particle layer and the negative electrode current collector in the charging process, lithium metal can be reliably deposited on the interface between the carbon particle layer and the solid electrolyte layer, and as a result, the effect of improving the fast charge characteristics can be further enhanced.

The carbon particle layer may be disposed on the entire surface of the negative electrode current collector as illustrated in Fig. 3 or may be disposed on a part of the surface of the negative electrode current collector. Even when the size of the current collector is larger than that in Fig. 3, for example, depending on the design of the structure of the current collector, the carbon particle layer can be efficiently used by providing the carbon particle layer only at a portion where lithium metal is to be deposited (a part of the surface of the negative electrode current collector).

The relationship between the size of the carbon particle layer and the size of the solid electrolyte layer when the power generating element is viewed in plan view in the lamination direction is not particularly limited. However, as illustrated in Fig. 3, in a plan view of the power generating element, the outer peripheral end of the carbon particle layer (graphene layer 18) is preferably located inside the outer peripheral end of the solid electrolyte layer 17. With such a configuration, it is possible to effectively prevent lithium metal deposited during charging from bypassing the outer peripheral end of the solid electrolyte layer and short-circuiting with the positive electrode active material layer.

The method for forming the carbon particle layer as described above on the surface of the negative electrode current collector is not particularly limited, but for example, a method can be adopted in which a slurry in which the carbon particles and a binder as necessary are dispersed in an appropriate solvent is applied to the surface of the negative electrode current collector, and the solvent is dried. Alternatively, the carbon particle layer may be formed by bonding a coating film obtained by applying the slurry on the surface of a support such as a stainless-steel foil and drying the solvent to the surface of the negative electrode current collector using a method such as isostatic pressing and then peeling off the support. In order to control the orientation of the carbon particles in the plane direction, the surface roughness (maximum height Rz), the peel strength, and the like of the carbon particle layer within the ranges of the preferred embodiment, it is effective to form the carbon particle layer on the surface of the negative electrode current collector by the above-described method, and then to subject the obtained laminate to a rolling treatment using a roll press machine. Although the details of the rolling treatment using a roll press machine will be omitted, the various parameters described above can be appropriately controlled by adjusting the pressing pressure (linear pressure) at the time of the rolling treatment, the number of times of the treatment, the blending ratio of the carbon particles and the binder, and the like.

### [Ion-conductive reaction suppression layer]

In the lithium secondary battery according to the present aspect, as illustrated in Fig. 3, an ion-conductive reaction suppression layer (carbon black layer 22) is preferably provided on at least a part of a region, where the positive electrode active material layer 15 faces the negative electrode current collector 11', of a main surface of the solid electrolyte layer 17 facing the negative electrode current collector 11'. This ion-conductive reaction suppression layer is a layer having lithium-ion conductivity and inhibiting a reaction between lithium metal (negative electrode active material layer) and a solid electrolyte. Therefore, by providing the ion-conductive reaction suppression layer, it is possible to prevent deterioration of the solid electrolyte and a decrease in battery capacity caused by the reaction between the lithium metal (negative electrode active material layer) and the solid electrolyte without hindering the progression of the battery reaction.

Here, the fact that a material "has lithium-ion conductivity" means that the degree of lithium-ion conductivity of the material at 25°C is 1×10⁻⁴ [S/cm] or more. On the other hand, the fact that a material "does not have lithium-ion conductivity" means that the degree of lithium-ion conductivity of the material at 25°C is less than 1×10⁻⁴ [S/cm]. In the lithium secondary battery according to the present aspect, the degree of lithium-ion conductivity of the constituent material of the ion-conductive reaction suppression layer at 25°C is 1×10⁻⁴ [S/cm] or more, preferably 1.5×10⁻⁴ [S/cm] or more, more preferably 2.0×10⁻⁴ [S/cm] or more, further preferably 2.5×10⁻⁴ [S/cm] or more, and particularly preferably 3.0×10⁻⁴ [S/cm] or more.

The constituent material of the ion-conductive reaction suppression layer is not particularly limited, and various materials capable of expressing the above-described function can be employed. Examples of the constituent material of the ion-conductive reaction suppression layer include nanoparticles having lithium-ion conductivity (in the present specification, nanoparticles as a constituent material of the ion-conductive reaction suppression layer are also simply referred to as "first nanoparticles"). When the ion-conductive reaction suppression layer contains the first nanoparticles, a lithium secondary battery having a particularly excellent function of the ion-conductive reaction suppression layer can be provided. Here, the "nanoparticles" mean particles having an average particle size on a scale of nanometers (nm). The "average particle size" of nanoparticles refers to a 50% cumulative diameter (D50) with respect to a particle size (maximum distance among distances between any two points on the contour line of the observed particle) measured by observing a cross-section of a layer containing nanoparticles with a scanning electron microscope (SEM). The average particle size of the first nanoparticles is preferably 500 nm or less, more preferably 300 nm or less, further preferably 150 nm or less, particularly preferably 100 nm or less, and most preferably 60 nm or less. In particular, when the average particle size of the first nanoparticles is 60 nm or less, a lithium secondary battery particularly excellent in the effect of suppressing the growth of dendrites can be provided. The lower limit value of the average particle size of the first nanoparticles is not particularly limited but is usually 10 nm or more and preferably 20 nm or more.

Such first nanoparticles preferably contain, for example, one or two or more elements selected from the group consisting of carbon, gold, platinum, palladium, silicon, silver, aluminum, bismuth, tin, and zinc, and more preferably contain one or two or more of elementary substances or alloys of these elements, from the viewpoint of being particularly excellent in the function as the ion-conductive reaction suppression layer. The first nanoparticles preferably contain carbon, and more preferably consist of an elementary substance of carbon. Examples of the material composed of such an elementary substance of carbon include acetylene black, Vulcan (registered trademark), Black Pearl (registered trademark), carbon nanofiber, Ketjen Black (registered trademark), carbon nanotube, carbon nanohorn, carbon nanoballoon, fullerene, and the like. When the ion-conductive reaction suppression layer contains such nanoparticles, the layer may further contain a binder.

The method for forming the ion-conductive reaction suppression layer containing the first nanoparticles as described above on the surface of the solid electrolyte layer on the negative electrode current collector side is not particularly limited, but for example, a method can be adopted in which a slurry in which the nanoparticles and a binder as necessary are dispersed in an appropriate solvent is applied to the surface of the solid electrolyte layer on the negative electrode current collector side, and the solvent is dried. Alternatively, the ion-conductive reaction suppression layer may be formed by bonding a coating film obtained by applying the slurry on the surface of a support such as a stainless-steel foil and drying the solvent to the surface of the solid electrolyte layer on the negative electrode current collector side using a method such as isostatic pressing and then peeling off the support. In some cases, a continuous layer containing any of the above-described materials may be formed by a method such as sputtering instead of the form of nanoparticles to form the ion-conductive reaction suppression layer.

Although the first nanoparticles for the constituent material of the ion-conductive reaction suppression layer have been described above, the ion-conductive reaction suppression layer containing the first nanoparticles described above usually has electron conductivity. When the ion-conductive reaction suppression layer has electron conductivity as described above, resistance to fast charge can be further improved, which is preferable.

However, it is also one of preferred embodiments that the ion-conductive reaction suppression layer is electronically insulated. When the ion-conductive reaction suppression layer is electronically insulated, stability to a lower potential is high, so that side reaction between the solid electrolyte layer and lithium metal can be more reliably prevented as compared with the case of electron conductivity, and this can effectively contribute to improvement of durability of the cell. Examples of the electron insulating constituent material of the ion-conductive reaction suppression layer include one or two or more lithium-containing compounds selected from the group consisting of lithium halide (lithium fluoride (LiF), lithium chloride (LiCl), lithium bromide (LiBr), or lithium iodide (LiI)), a composite metal oxide represented by Li-M-O (M is one or two or more metal elements selected from the group consisting of Mg, Au, Al, Sn, and Zn), and a Li-Ba-TiO₃ composite oxide. All of these materials are more stable in reductive decomposition due to contact with lithium metal than the solid electrolyte. That is, when the tendency of the solid electrolyte constituting the solid electrolyte layer to undergo reductive decomposition due to contact with lithium metal is compared with the tendency of the lithium-containing compound as the constituent material of the ion-conductive reaction suppression layer to undergo reductive decomposition due to contact with lithium metal, the latter tendency is smaller. Therefore, the lithium-containing compound can also function as an ion-conductive reaction suppression layer. The method for forming the ion-conductive reaction suppression layer containing a lithium-containing compound as described above is also not particularly limited, but for example, a continuous layer containing the above-described lithium-containing compound can be formed by a method such as sputtering to form the ion-conductive reaction suppression layer.

The average thickness of the ion-conductive reaction suppression layer is not particularly limited, and the carbon particle layer may be disposed at such a thickness that the above-described function can be exhibited. For example, the average thickness of the ion-conductive reaction suppression layer is preferably 300 nm to 20 µm, more preferably 500 nm to 15 µm, and further preferably 1 to 10 µm when this layer is a layer containing first nanoparticles. When this layer is a continuous layer made of a lithium-containing compound or the like formed by a method such as sputtering, the average thickness is preferably 0.5 to 20 nm. The "average thickness" of the ion-conductive reaction suppression layer means a value calculated as an arithmetic average value of thicknesses measured at several to several tens of different points in the ion-conductive reaction suppression layer constituting the lithium secondary battery.

The Young's modulus of the ion-conductive reaction suppression layer is preferably 2 GPa or more, more preferably 5 GPa or more, particularly preferably 8 GPa or more, and particularly preferably 10 GPa or more. When the ion-conductive reaction suppression layer shows such a high Young's modulus, even if dendrite is generated from lithium metal deposited during fast charge, it is possible to effectively prevent generation of internal short-circuit due to the dendrite penetrating the solid electrolyte layer and reaching the positive electrode active material layer. As the value of the Young's modulus of the ion-conductive reaction suppression layer, a value measured in accordance with JIS K 7161-1:2014 is adopted.

### [Lithium deposition energy reducing layer]

In the lithium secondary battery according to the present aspect, as illustrated in Fig. 3, it is preferable that a lithium deposition energy reducing layer (magnesium layer 23) containing an elementary substance of an element capable of forming an alloy with lithium or a compound containing the element is further provided on at least a part of the main surface (preferably the entire surface of the main surface) of the ion-conductive reaction suppression layer (carbon black layer 22) facing the negative electrode current collector 11'. According to such a configuration, when lithium metal is deposited as the negative electrode active material layer in the charging process of the lithium secondary battery, the constituent material of the lithium deposition energy reducing layer forms an alloy with lithium, so that energy when the lithium metal is deposited as the negative electrode active material layer can be reduced, and charge and discharge at a higher current density can be performed. As a result, even when fast charge is performed, the charge capacity can be further improved. Here, examples of the element capable of forming an alloy with lithium contained in the lithium deposition energy reducing layer include at least one selected from the group consisting of gold, silver, zinc, magnesium, aluminum, platinum, silicon, tin, bismuth, indium, and palladium. The lithium deposition energy reducing layer may be composed of a compound containing these elements in addition to an elementary substance of these elements. Examples of the compound include, in addition to salts such as chloride, sulfate, carbonate, and nitrate, oxides such as SiOₓ and SnOₓ, alloys containing transition metal elements such as a Ni-Si alloy, a Ti-Si alloy, a Mg-Sn alloy, and a Fe-Sn alloy, and the like. Among them, it is preferable to contain an elementary substance of the element or a salt of the element, and it is more preferable to contain an elementary substance of silver, zinc, or magnesium or a salt of the element.

The average thickness of the lithium deposition energy reducing layer is not particularly limited, and the carbon particle layer may be disposed at such a thickness that the above-described function can be exhibited. For example, the average thickness of the lithium deposition energy reducing layer is preferably 10 nm to 10 µm, more preferably 50 nm to 6 µm, and further preferably 1 to 4 µm. The "average thickness" of the lithium deposition energy reducing layer means a value calculated as an arithmetic average value of thicknesses measured at several to several tens of different points in the lithium deposition energy reducing layer.

Although a case where the secondary battery according to the present aspect is an all-solid-state lithium secondary battery is described as an example, the lithium secondary battery according to the present aspect may not be an all-solid type. That is, the solid electrolyte layer may further contain a conventionally known liquid electrolyte (electrolyte solution). The amount of the liquid electrolyte (electrolyte solution) that can be contained in the solid electrolyte layer is not particularly limited but is preferably such an amount that the shape of the solid electrolyte layer formed by the solid electrolyte is maintained and liquid leakage of the liquid electrolyte (electrolyte solution) does not occur. As the liquid electrolyte (electrolyte solution), a solution containing a conventionally known lithium salt dissolved in a conventionally known organic solvent is used. The liquid electrolyte (electrolyte solution) may further contain an additive other than the organic solvent and the lithium salt. These additives may be used singly or in combination of two or more kinds thereof. The amount of the additive used in the electrolyte solution can be appropriately adjusted.

### Examples

Hereinafter, the present invention will be described in more detail with reference to Examples. However, the technical scope of the present invention is not limited only to the following Examples. Hereinafter, the operation was performed in a glove box in an argon atmosphere with a dew point of -68°C or lower. The instruments, devices, and the like used in the glove box were sufficiently dried in advance.

### <Preparation example of evaluation cell>

### [Example 1]

### (Preparation of positive electrode active material layer)

As constituent materials of the positive electrode active material layer, an NMC composite oxide (LiNi_{0.8}Mn_{0.1}Co_{0.1}O₂, average particle size (D50): 3 µm) as a positive electrode active material, an argyrodite-type sulfide solid electrolyte (Li₆PS₅Cl, average particle size (D50): 0.2 µm) as a solid electrolyte, carbon nanofibers (CNF) (VGCF (registered trademark) manufactured by Showa Denko K.K., aspect ratio: 60, average fiber diameter: about 150 nm, average fiber length: about 9 µm) as a conductive aid, and polytetrafluoroethylene (PTFE) as a binder were prepared. In a glove box in an argon atmosphere with a dew point of -68°C or lower, the positive electrode active material, the solid electrolyte, the conductive aid, and the binder were weighed to have a mass ratio of 79 : 16 : 3 : 2, and these materials were kneaded in an agate mortar. It was confirmed that the binder was fibrillated, and the obtained mixture was molded into a sheet shape using a hand roller and then punched into a 19 mm square to obtain a positive electrode active material layer having a thickness of 100 µm.

### (Preparation of solid electrolyte layer)

A solid electrolyte slurry was prepared by mixing 95 parts by mass of an argyrodite-type sulfide solid electrolyte (Li₆PS₅Cl) as a solid electrolyte and a binder solution (obtained by dissolving 5 parts by mass of styrene-butadiene rubber (SBR) as a binder in mesitylene as a solvent). The obtained solid electrolyte slurry was applied to a surface of a stainless-steel foil as a support using an applicator, dried, and then punched into a 25 mm square to obtain a solid electrolyte layer having a thickness of 30 µm.

### (Preparation of negative electrode)

A carbon particle slurry (solid content: 5 mass%) was prepared by mixing 95 parts by mass of graphene as carbon particles and a binder solution (obtained by dissolving 5 parts by mass of polyvinylidene fluoride (PVdF) as a binder in N-methyl-2-pyrrolidone (NMP) as a solvent). The obtained carbon particle slurry was applied onto the surface of a stainless-steel foil (thickness: 10 µm) as a negative electrode current collector using an applicator and dried to obtain a laminate. Thereafter, the obtained laminate was subjected to a rolling treatment using a roll press machine to form the laminate into a sheet shape and punched into a 21 mm square to obtain a negative electrode in which the carbon particle layer was laminated on the surface of the negative electrode current collector. In this Example, the conditions of the roll press machine were set so that the thickness of the carbon particle layer was 100 nm. For the carbon particles (graphene) used in this Example, the intensity ratio R (I_{G}/I_{D}) of G-band peak intensity (I_{G}) and D-band peak intensity (I_{D}) measured by Raman scattering spectroscopy was measured. Specifically, first, a Raman spectrum of carbon particles was measured using a microscopic Raman spectrometer. A peak area ratio (I_{G}/I_{D}) of a peak intensity (I_{G}) of a band (G band) located at 1500 to 1600 cm⁻¹ (near 1582 cm⁻¹) and a peak intensity (I_{D}) of a peak (D band) located at 1300 to 1400 cm⁻¹ (near 1350 cm⁻¹) was calculated and defined as the intensity ratio R (the same applies hereinafter). As a result, the intensity ratio R of the carbon particles was 8223.

### (Preparation of evaluation cell)

The positive electrode active material layer prepared above and the solid electrolyte layer prepared above are sequentially superposed on an aluminum foil (19 mm square, thickness: 20 µm) as a positive electrode current collector, the stainless-steel foil as a support of the solid electrolyte layer was peeled off, and pressure was applied by cold isostatic pressing (CIP) to obtain a laminate composed of the positive electrode current collector/the positive electrode active material layer/the solid electrolyte layer. At this time, the pressing pressure during the CIP treatment was controlled so that the outer peripheral edge portion of the solid electrolyte layer extended to the middle of the side surface of the positive electrode active material layer over the entire periphery. Subsequently, an ion-conductive reaction suppression layer (thickness: 100 nm) made of lithium chloride (LiCl) was formed on the exposed surface of the solid electrolyte layer by sputtering to obtain a laminate composed of the positive electrode current collector/the positive electrode active material layer/the solid electrolyte layer/the ion-conductive reaction suppression layer. At this time, sputtering conditions were controlled so that the outer peripheral edge portion of the ion-conductive reaction suppression layer extended to the middle of the side surface of the solid electrolyte layer over the entire periphery. The Young's modulus of the obtained ion-conductive reaction suppression layer (LiCl layer) was measured by a spherical nanoindentation measurement method and found to be 30 GPa.

Thereafter, the negative electrode prepared above was superposed such that the exposed surface of the carbon particle layer faced the ion-conductive reaction suppression layer, and was pressurized by cold isostatic pressing (CIP) to prepare an evaluation cell (lithium-deposition-type all-solid-state lithium secondary battery).

### [Example 2]

An evaluation cell (lithium-deposition-type all-solid-state lithium secondary battery) of this Example was prepared by the same method as in Example 1 described above, except that graphite (intensity ratio R = 26) was used instead of graphene as carbon particles constituting the carbon particle layer. In this Example, the conditions of the roll press machine were set so that the thickness of the carbon particle layer was 3 µm.

### [Example 3]

An evaluation cell (lithium-deposition-type all-solid-state lithium secondary battery) of this Example was prepared by the same method as in Example 1 described above, except that graphite (intensity ratio R = 7) was used instead of graphene as carbon particles constituting the carbon particle layer. In this Example, the conditions of the roll press machine were set so that the thickness of the carbon particle layer was 3 µm.

### [Example 4]

In Example 1 described above, a carbon black layer was used instead of the sputtering layer of lithium chloride as the ion-conductive reaction suppression layer. A carbon black slurry (solid content: 5 mass%) was prepared by mixing 90 parts by mass of carbon black and a binder solution (obtained by dissolving 10 parts by mass of polyvinylidene fluoride (PVdF) as a binder in N-methyl-2-pyrrolidone (NMP) as a solvent). The obtained carbon black slurry was applied to a surface of a stainless-steel foil as a support using an applicator, dried, and then punched into a 21 mm square to obtain a carbon black layer having a thickness of 10 µm formed on the support. The Young's modulus of the obtained ion-conductive reaction suppression layer (carbon black layer) was measured by a spherical nanoindentation measurement method and found to be 2 GPa. The positive electrode active material layer prepared above and the exposed surface of the solid electrolyte layer prepared above were sequentially superposed on an aluminum foil (19 mm square) as a positive electrode current collector, the stainless-steel foil as a support of the solid electrolyte layer was peeled off, the exposed surface of the carbon black layer prepared above was further superposed, the stainless-steel foil as a support of the carbon black layer was peeled off, and pressure was applied by cold isostatic pressing (CIP) to obtain a laminate composed of the positive electrode current collector/the positive electrode active material layer/the solid electrolyte layer/the ion-conductive reaction suppression layer. At this time, the pressing pressure during the CIP treatment was controlled so that the outer peripheral edge portion of the solid electrolyte layer extended to the middle of the side surface of the positive electrode active material layer over the entire periphery and the outer peripheral edge portion of the ion-conductive reaction suppression layer extended to the middle of the side surface of the solid electrolyte layer over the entire periphery. Except for this, an evaluation cell (lithium-deposition-type all-solid-state lithium secondary battery) of this Example was prepared by the same method as in Example 1 described above.

### [Example 5]

Before bonding the negative electrode to the ion-conductive reaction suppression layer, a dispersion liquid in which a magnesium chloride powder was dispersed in an appropriate amount of ethanol was spray-coated to the exposed surface of the carbon black layer, and dried to form a lithium deposition energy reducing layer (thickness: 10 nm). Thereafter, the lithium deposition energy reducing layer in the negative electrode was superposed such that the exposed surface of the lithium deposition energy reducing layer faced the ion-conductive reaction suppression layer, and was pressurized by cold isostatic pressing (CIP) to prepare an evaluation cell (lithium-deposition-type all-solid-state lithium secondary battery). Except for this, an evaluation cell (lithium-deposition-type all-solid-state lithium secondary battery) of this Example was prepared by the same method as in Example 1 described above.

### [Comparative Example 1]

An evaluation cell (lithium-deposition-type all-solid-state lithium secondary battery) of this Comparative Example was prepared by the same method as in Example 1 described above, except that graphite (intensity ratio R = 4) was used instead of graphene as carbon particles constituting the carbon particle layer. In this Comparative Example, the conditions of the roll press machine were set so that the thickness of the carbon particle layer was 3 µm.

### [Comparative Example 2]

An evaluation cell (lithium-deposition-type all-solid-state lithium secondary battery) of this Comparative Example was prepared by the same method as in Comparative Example 1 described above, except that the rolling treatment using a roll press machine was not performed in the preparation of the carbon particle layer. The thickness of the obtained carbon particle layer was 7 µm.

### [Comparative Example 3]

An evaluation cell (lithium-deposition-type all-solid-state lithium secondary battery) of this Comparative Example was prepared by the same method as in Comparative Example 1 described above, except that carbon black (intensity ratio R = 0.9) was used instead of graphene as carbon particles constituting the carbon particle layer. In this Comparative Example, the conditions of the roll press machine were set so that the thickness of the carbon particle layer was 7 µm.

### [Evaluation of negative electrode]

For the carbon particle layer of the negative electrode prepared in each of Examples and Comparative Examples described above, the cross-section in the lamination direction was observed using a scanning electron microscope (SEM), and among the carbon particles contained in the carbon particle layer, the proportion of particles whose major axes are oriented in the plane direction of the carbon particle layer (that is, the angle formed by the major axis and the plane direction is 45° or less) was measured. The "major axis of the particle" refers to a direction of a line segment indicating a maximum distance between two parallel straight lines when the contour of the carbon particle in the SEM cross-sectional image is sandwiched between the straight lines. As a result, in the carbon particle layers of Examples 1 to 5 and Comparative Example 1, it was confirmed that 80% or more of the carbon particles were oriented in the plane direction. On the other hand, in the carbon particle layer of Comparative Example 2, although some orientation of the carbon particles in the plane direction was observed, the proportion of carbon particles having an orientation of 45° or less was less than 80%. In the carbon particle layer of Comparative Example 3, the carbon particles were randomly oriented, and no orientation was particularly confirmed.

For the carbon particle layer of the negative electrode prepared above, Rz (maximum height) defined in JIS B 0601-2001 was measured. The results are shown in Table 1 below. For the negative electrode prepared above, the peel strength between the carbon particle layer and the negative electrode current collector was measured. Specifically, the negative electrode prepared above was cut into a width of 10 mm to prepare a sample, and the surface on the carbon particle layer side was fixed to a table using a double-sided tape. Next, a 90° peel test was performed at a peel speed of 100 mm/min, and the peel strength was measured when the interface between the carbon particle layer and the negative electrode current collector was peeled off. The results are shown in Table 1 below.

### [Evaluation of evaluation cell (measurement of charge-discharge efficiency)]

A positive electrode lead and a negative electrode lead were connected to the positive electrode current collector and the negative electrode current collector of the evaluation cell prepared above, respectively, and charge and discharge was performed at a charge-discharge rate of 0.1 C or 3.5 C according to the following charge-discharge test conditions. At this time, the following charge-discharge test was performed while applying a confining pressure of 3 [MPa] in the lamination direction of the evaluation cell using the pressurizing member.

### (Charge-discharge test conditions)

1) Charge-discharge conditions
   [Voltage range] 3.0 to 4.3 V
   [Charging process] CCCV (0.01 C cut-off)
   [Discharging process] CC
   [Charge-discharge rate] 0.1 C or 3.5 C
   (stop for 30 minutes after charging and discharging)
2) Evaluation temperature: 333 K (60°C)

The evaluation cell was charged from 3.0 V to 4.3 V at the above rate in a constant current/constant voltage (CCCV) mode (0.01 C cut-off) in a charging process (lithium metal was deposited on the negative electrode current collector) in a thermostatic bath set at the above evaluation temperature using a charge-discharge tester. Thereafter, in the discharging process (lithium metal on the negative electrode current collector was dissolved), the evaluation cell was discharged from 4.3 V to 3.0 V at the above rate in a constant current (CC) mode. Here, "1 C" is a current value at which the battery is fully charged (100% charged) when charged at the current value for 1 hour. As an index of the fast charge characteristics, the charge capacity ratio was calculated as a value of a ratio of the charge capacity at 3.5 C to the charge capacity at 0.1 C. The results are shown in Table 1 below. After the completion of the charge-discharge test, the deposition position of lithium metal in the evaluation cell was visually observed. The results thereof are also shown in Table 1 below.

**[Table 1]**

| | Carbon particle layer | | | | | | lon-conductive reaction suppression layer | Lithium deposition energy reducing layer | 3.5 C/0.1 C charge capacity ratio | Deposition position of Li metal |
|---|---|---|---|---|---|---|---|---|---|---|
| | Carbon type | R (I_{G}/I_{D}) | Thickness | Orientation | Maximum height (Rz) | Peel strength [N/m] | | | | |
| Example 1 | Graphene | 8223 | 100 nm | 80% or more is 45° or less | 8 | 15 | LiCl layer | - | 0.6 | Interface of solid electrolyte layer/conductive layer |
| Example 2 | Graphite | 26 | 3 µm | 80% or more is 45° or less | 15 | 5 | LiCl layer | - | 0.4 | Interface of solid electrolyte layer/conductive layer |
| Example 3 | Graphite | 7 | 3 µm | 80% or more is 45° or less | 15 | 5 | LiCl layer | - | 0.4 | Interface of solid electrolyte layer/conductive layer |
| Example 4 | Graphene | 8223 | 100 nm | 80% or more is 45° or less | 8 | 15 | Carbon black layer | | 0.7 | Interface of solid electrolyte layer/conductive layer |
| Example 5 | Graphene | 8223 | 100 nm | 80% or more is 45° or less | 8 | 15 | LiCl layer | MgCl layer | 0.7 | Interface of solid electrolyte layer/conductive layer |
| Comparative Example 1 | Graphite | 4 | 3 µm | 80% or more is 45° or less | 15 | 3 | LiCl layer | - | 0.2 | Interface of solid electrolyte layer/conductive layer |
| Comparative Example 2 | Graphite | 4 | 7 µm | "80% or more is" not "45° or less" | 20 | 3 | LiCl layer | - | 0.1 | Interface of solid electrolyte layer/conductive layer |
| Comparative Example 3 | Carbon black | 0.9 | 7 µm | No orientation | 32 | 3 | LiCl layer | - | 0.1 | Interface of conductive layer/negative electrode current collector |

From the results shown in Table 1, it is found that the charge capacity ratio of 3.5 C/0.1 C is significantly improved by providing the carbon particle layer having an intensity ratio R (I_{G}/I_{D}) of 7 or more on the surface of the negative electrode current collector. From this point, it was shown that according to the present invention, a rate characteristic which can respond to fast charge can be developed in a lithium-deposition-type lithium secondary battery.

From comparison of Example 1 with Examples 2 and 3, it is also found that the charge capacity ratio can be remarkably improved by using carbon particles having a higher intensity ratio R as a material constituting the carbon particle layer (for example, by using graphene rather than graphite).

From the comparison between Example 1 and Example 4, it is also found that the charge capacity ratio can be further improved by using an electron conductive layer rather than using an electron insulating layer as the ion-conductive reaction suppression layer.

### Reference Signs List

- 10a: Laminate type secondary battery
- 11': Negative electrode current collector
- 11": Positive electrode current collector
- 13: Negative electrode active material layer
- 15: Positive electrode active material layer
- 17: Solid electrolyte layer
- 18: Graphene layer (carbon particle layer)
- 19: Single battery layer
- 20: Insulating layer
- 21: Power generating element
- 22: Carbon black layer (ion-conductive reaction suppression layer)
- 23: Magnesium layer (lithium deposition energy reducing layer)
- 25: Negative electrode current collecting plate (negative electrode tab)
- 27: Positive electrode current collecting plate (positive electrode tab)
- 29: Laminate film

## Claims

1. A lithium secondary battery comprising a power generating element, the power generating element including:
a positive electrode in which a positive electrode active material layer containing a positive electrode active material capable of occluding and releasing lithium ions is disposed on a surface of a positive electrode current collector;
a negative electrode which includes a negative electrode current collector in which lithium metal is deposited on the negative electrode current collector during charging; and
a solid electrolyte layer intervening between the positive electrode and the negative electrode and containing a solid electrolyte,
wherein a carbon particle layer containing carbon particles having an intensity ratio R (I_{G}/I_{D}) of G-band peak intensity (I_{G}) and D-band peak intensity (I_{D}) measured by Raman scattering spectroscopy of 7 or more, is disposed on at least a part of a region, where the positive electrode active material layer faces the negative electrode current collector, of a main surface of the negative electrode current collector facing the solid electrolyte layer.

2. The lithium secondary battery according to claim 1, wherein the carbon particle layer contains carbon particles having an intensity ratio R of 50 or more.

3. The lithium secondary battery according to claim 1 or 2, wherein the carbon particles contain graphene.

4. The lithium secondary battery according to claim 1 or 2, wherein, among the carbon particles contained in the carbon particle layer, a proportion of particles whose major axes are oriented in a plane direction of the carbon particle layer is 80% or more.

5. The lithium secondary battery according to claim 1 or 2, wherein a surface roughness (maximum height; Rz) of a main surface of the carbon particle layer on the solid electrolyte layer side is 15 µm or less.

6. The lithium secondary battery according to claim 1 or 2, wherein a peel strength of the carbon particle layer from the negative electrode current collector is 5 N/m or more.

7. The lithium secondary battery according to claim 1 or 2, wherein the carbon particle layer is disposed on a part of a surface of the negative electrode current collector.

8. The lithium secondary battery according to claim 1 or 2, wherein an outer peripheral end of the carbon particle layer is located inside an outer peripheral end of the solid electrolyte layer when the power generating element is viewed in plan view.

9. The lithium secondary battery according to claim 1 or 2, wherein an ion-conductive reaction suppression layer having lithium-ion conductivity and suppressing a reaction between the lithium metal and the solid electrolyte is provided on at least a part of a region, where the positive electrode active material layer faces the negative electrode current collector, of a main surface of the solid electrolyte layer facing the negative electrode current collector.

10. The lithium secondary battery according to claim 9, wherein the ion-conductive reaction suppression layer has electron conductivity.

11. The lithium secondary battery according to claim 9, wherein the ion-conductive reaction suppression layer has an electron insulating property.

12. The lithium secondary battery according to claim 9, wherein a Young's modulus of the ion-conductive reaction suppression layer is 2 GPa or more.

13. The lithium secondary battery according to claim 9, wherein a lithium deposition energy reducing layer containing an elementary substance of an element capable of forming an alloy with lithium or a compound or salt containing the element is further provided on at least a part of a main surface of the ion-conductive reaction suppression layer facing the negative electrode current collector.
